# FASCICULE DE BREVET EUROPEEN

(11) **EP 3 870 459 B1**
(45) Date de publication et mention de la délivrance du brevet: **30.11.2022**
(21) Numéro de dépôt: 19816374.3
(22) Date de dépôt: 21.10.2019
(51) Int. Cl.: B60C 1/00, C08K 3/04, C08C 19/25, C08K 3/30, C08K 5/47, C08K 5/00

(54) **COMPOSITION DE CAOUTCHOUC**
KAUTSCHUKZUSAMMENSETZUNG
RUBBER COMPOSITION

(30) Priorité: 23.10.2018 FR 1859776
(43) Date de publication de la demande: 01.09.2021
(73) Titulaire: COMPAGNIE GENERALE DES ETABLISSEMENTS MICHELIN, 63000 Clermont-Ferrand (FR)
(72) Inventeur: MORESO, Emma, 63040 CLERMONT-FERRAND Cedex 9 (FR); LAFAQUIERE, Vincent, 63040 CLERMONT-FERRAND Cedex 9 (FR); THUILLIEZ, Julien, 63040 CLERMONT-FERRAND Cedex 9 (FR)
(74) Mandataire: Gandon-Pain, Sylvie
(86) Numéro de dépôt international: PCT/FR2019/052493
(87) Numéro de publication internationale: WO 2020/084235

(56) Documents cités:
- WO-A1-2009/133068
- WO-A1-2016/012258
- WO-A1-2016/012259

## Description

La présente invention concerne une composition de caoutchouc utilisable notamment pour la fabrication de pneumatique, qui comprend une charge renforçante qui contient majoritairement en masse un noir de carbone et un élastomère diénique fonctionnel et fortement saturé, car riche en unité éthylène.

Les compositions de caoutchouc pour pneumatique comprennent généralement des élastomères riches en unité diénique tels que les polybutadiènes, les polyisoprènes et les copolymères de 1,3-butadiène ou d'isoprène et de styrène. Le remplacement de ces élastomères riches en unité diénique dans ces mêmes compositions par des élastomères diéniques riches en unité éthylène peut s'accompagner à la fois d'une diminution d'hystérèse de la composition de caoutchouc et d'une augmentation de sa rigidité, ce qui se traduit par une modification du compromis de performance entre la résistance au roulement et l'usure. On peut par exemple se référer au document WO 2014114607. Ces élastomères diéniques riches en unité éthylène ont aussi la propriété de conférer aux compositions de caoutchouc une performance améliorée de résistance à l'usure dans des conditions extrêmes, comme cela est décrit dans le document WO 2016012259.

Pour améliorer davantage la performance de résistance au roulement, il est connu d'utiliser des élastomères qui présentent une ou des fonctions interactives avec la charge renforçante. Des élastomères fonctionnels peuvent être préparés par polymérisation anionique, la fonctionnalisation ayant lieu pendant la réaction d'amorçage ou de terminaison. La modification des extrémités des chaînes polymères produites par polymérisation anionique repose sur le caractère vivant des chaînes polymères, le caractère vivant se traduisant par l'absence de réaction de transfert et de réaction de terminaison pendant la réaction de polymérisation. La polymérisation vivante se caractérise aussi par le fait qu'une seule chaîne polymère est produite par mole d'amorceur ou par métal. La modification en extrémité de chaîne d'un polymère par une fonction alcoxysilane ou silanol est beaucoup moins décrite pour les polymères synthétisés par polymérisation catalytique au moyen d'un système catalytique hétérogène de type Ziegler-Natta. A titre d'exemple, on peut citer le document WO 2001034658 qui décrit la fonctionnalisation d'un polybutadiène à fort taux de liaison 1,4-cis préparé par une catalyse de coordination à partir d'un système catalytique comprenant un carboxylate de néodyme. Mais ces voies de synthèse ne conduisent pas à des élastomères diéniques riches en unité éthylène.

La polymérisation au moyen d'un système catalytique de coordination, comprenant un métallocène permet d'accéder à des copolymères diéniques riches en éthylène. Mais cette polymérisation procède d'une chimie différente de la polymérisation anionique et de la polymérisation par catalyse Ziegler Natta. Une première différence porte sur le système catalytique, par exemple décrit dans les documents EP 1 092 731 B1, WO 2004035639 et EP 1 954 706 B1 qui est typiquement composé d'un métallocène et d'un co-catalyseur, un organomagnésien. Une deuxième différence porte sur les réactions mises en jeu qui comprennent de nombreuses réactions de transfert entre le métal du métallocène et le magnésium du co-catalyseur et qui permettent aussi la production d'un grand nombre de chaînes copolymères par métal de métallocène. Une troisième différence porte sur les chaînes polymères produites qui comportent à la fois des unités insaturées telles que des unités diéniques, et des unités saturées éthyléniques. Une autre différence porte sur la structure chimique de l'extrémité de chaîne à modifier, structure qui résulte du mécanisme très spécifique de polymérisation. On peut se référer par exemple au document ACS Catalysis, 2016, Volume 6, Issue 2, pages 1028-1036. En raison de la spécificité des espèces et des réactions mises en jeu dans la synthèse de ces copolymères, il n'est pas décrit à ce jour de procédé permettant la modification de ces copolymères en extrémité de chaîne et par suite une diminution d'hystérèse de compositions de caoutchouc renforcées majoritairement de noir de carbone et contenant ces copolymères.

Il a été proposé dans le document WO 2016012258 de modifier, après leur synthèse, des élastomères diéniques riches en unité éthylène en les fonctionnalisant avec des groupes associatifs par réaction de greffage d'un composé 1,3-dipolaire sur les unités diéniques des élastomères. Les élastomères modifiés confèrent à la composition de caoutchouc une hystérèse réduite. Néanmoins, la rigidité de la composition reste aussi élevée qu'avant la modification, ce qui peut les rendre inappropriés pour être utilisés dans un article semi-fini pour pneumatique.

Le but de la présente invention est de proposer une composition de caoutchouc renforcée majoritairement de noir de carbone et faiblement hystérétique qui comprend un élastomère diénique riche en unité éthylène tout en diminuant sa rigidité. Ce but est atteint en ce que les inventeurs ont découvert qu'un tel compromis entre rigidité et hystérèse pouvait être obtenu par la modification de l'extrémité de chaîne de l'élastomère diénique riche en unité éthylène par un groupe fonctionnel composé d'une fonction silanol ou alcoxysilane et d'une fonction amine.

Ainsi un premier objet de l'invention est une composition de caoutchouc qui comprend une charge renforçante qui contient un noir de carbone, un système de réticulation et un élastomère fortement saturé comprenant des unités 1,3-diène et des unités éthylène et portant en extrémité de chaîne un groupe fonctionnel F¹ composé d'une fonction comportant un atome de silicium et d'une fonction amine F², la fonction comportant un atome de silicium étant une fonction silanol ou une fonction alcoxysilane, les unités éthylène représentant plus de 50% en mole de l'ensemble des unités monomères de l'élastomère fortement saturé, le noir de carbone représentant plus de 50% en masse de la charge renforçante.

L'invention a aussi pour objet un pneumatique qui comprend une composition de caoutchouc conforme à l'invention.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par « l'ensemble des unités monomères de l'élastomère » ou « la totalité des unités monomères de l'élastomère » tous les motifs de répétition constitutifs de l'élastomère qui résultent de l'insertion des monomères dans la chaîne élastomère par polymérisation.

L'élastomère fortement saturé utile aux besoins de l'invention est un élastomère qui comprend des unités éthylène résultant de la polymérisation d'éthylène. De manière connue, l'expression « unité éthylène » fait référence au motif -(CH₂-CH₂)- résultant de l'insertion de l'éthylène dans la chaîne élastomère. L'élastomère utile aux besoins de l'invention est qualifié d'élastomère fortement saturé, puisque les unités éthylène représentent plus de 50% en mole de l'ensemble des unités monomères de l'élastomère fortement saturé. De préférence, elles représentent plus de 60% en mole de l'ensemble des unités monomères de l'élastomère fortement saturé. De manière plus préférentielle, le taux d'unité éthylène dans l'élastomère fortement saturé est d'au moins 65% en mole de l'ensemble des unités monomères de l'élastomère fortement saturé.

L'élastomère utile aux besoins de l'invention comprend aussi des unités 1,3-diène résultant de la polymérisation d'un 1,3-diène. De manière connue, l'expression « unité 1,3-diène » fait référence aux unités résultant de l'insertion du 1,3-diène par une insertion 1,4, une insertion 2,1 ou une insertion 3,4 comme dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène.

Selon un premier mode de réalisation de l'invention, l'élastomère contient des unités de formule (I), également désignées unités UD. La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance.

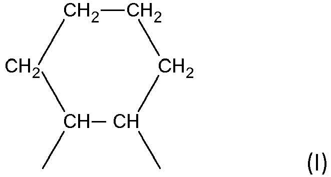

Selon un deuxième mode de réalisation de l'invention, l'élastomère fortement saturé contient des unités de formule (II), également désignées unités UC.

- CH₂ - CH (CH=CH₂)- (II)

Selon un troisième mode de réalisation de l'invention, l'élastomère fortement saturé contient des unités de formule (I) et des unités de formule (II).

Selon un quatrième mode de réalisation de l'invention, l'élastomère fortement saturé contient des unités UD de formule (I) et des unités de formule (III), également désignées unités UE.

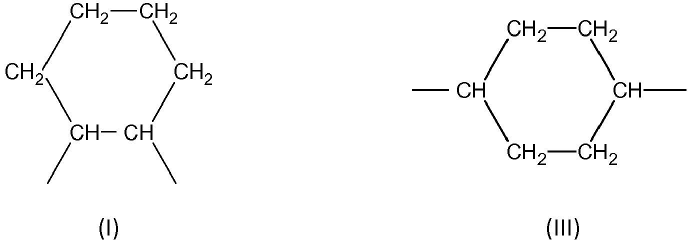

Lorsque l'élastomère fortement saturé est un copolymère d'éthylène et de 1,3-butadiène, il contient de préférence les unités UA, UB, UC, UD et UE suivantes réparties de façon statistique selon les pourcentages molaires indiqués ci-après :

| | | |
|---|---|---|
| UA) | -CH₂-CH₂- | selon un pourcentage molaire de m% |
| UB) | -CH₂-CH=CH-CH₂- | selon un pourcentage molaire de n% |
| UC) | -CH₂-CH(CH=CH₂)- | selon un pourcentage molaire de o% |
| UD) | 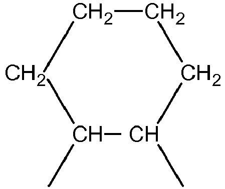 | selon un pourcentage molaire de p% |
| UE) | 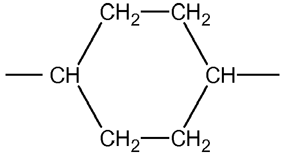 | selon un pourcentage molaire de q% |

▪ m, n, o, p et q étant des nombres allant de 0 à 100,
▪ m > 50
▪ n + o > 0
▪ p > 0
▪ q ≥ 0,
▪ les pourcentages molaires respectifs de m, n, o, p et q étant calculés sur la base de la somme de m+ n + o + p + q qui est égale à 100.

De manière plus préférentielle,
▪ 0 < o + p ≤ 25
▪ o + p + q ≥ 5
▪ n + o >0
▪ q ≥ 0,
▪ les pourcentages molaires respectifs de m, n, o, p et q étant calculés sur la base de la somme de m+ n + o + p + q qui est égale à 100.

De manière encore plus préférentielle, l'élastomère présente au moins l'un des critères suivants, et préférentiellement tous :
▪ m ≥ 65
▪ n + o + p + q ≥ 15, de préférence n + o + p + q ≥ 20
▪ 12 ≥ p + q ≥ 2
▪ 1 ≥ n / (o + p + q)
▪ lorsque q est non nul, 20 ≥ p / q ≥ 1.

Avantageusement q est égal à 0.

Selon un cinquième mode de réalisation de l'invention, l'élastomère fortement saturé contient des unités 1,4-trans qui représentent plus de 80% en mole des unités 1,3-diène de l'élastomère fortement saturé. Autrement dit, les unités 1,3-diène dans l'élastomère fortement saturé contiennent plus de 80% en mole d'unité 1,4-trans selon de mode de réalisation. De façon bien connue, les unités 1,4-trans sont des unités 1,4 qui ont la configuration trans.

Selon le cinquième mode de réalisation, l'élastomère fortement saturé peut comprendre des unités de formule (I), auquel cas les unités UD représentent de préférence moins de 1% en mole de l'ensemble des unités monomères de l'élastomère fortement saturé.

Selon une variante du cinquième mode de réalisation, l'élastomère fortement saturé comprend des unités d'une α-monooléfine réparties de façon statistique au sein de l'élastomère. Par alpha-oléfine (α-oléfine), on entend une oléfine terminale, c'est-à-dire qu'elle contient le groupe vinylique de formule -CH=CH₂. Par monooléfine, on entend un monomère qui contient une seule double liaison carbone carbone hormis celles du noyau benzénique du groupe aromatique. L'α-monooléfine peut être aliphatique ; à ce titre, on peut citer les α-monooléfines aliphatiques ayant de 3 à 18 atomes de carbone, telles que le propène, le 1-butène, le 1-hexène, le 1-octène, le 1-hexadécène ou leurs mélanges. L'a-monooléfine peut être aussi une α-monooléfine aromatique. Typiquement, l'α-monooléfine aromatique est de formule CH₂=CH-Ar, dans lequel le symbole Ar représente un groupe aromatique. Le groupe aromatique peut être un phényle, substitué ou non. A titre d'a-monooléfine aromatique conviennent le styrène, les styrènes substitués par un ou plusieurs groupes alkyles en para, méta ou ortho ou leurs mélanges. Selon cette variante, l'élastomère fortement saturé est préférentiellement un terpolymère d'un 1,3-diène, d'éthylène et d'une α-monooléfine, plus préférentiellement un terpolymère de 1,3-butadiène, d'éthylène et de styrène.

De préférence, l'élastomère fortement saturé utile aux besoins de l'invention est un copolymère d'éthylène et d'un 1,3-diène ou un terpolymère d'un 1,3-diène, d'éthylène et d'une α-monooléfine, de préférence un copolymère d'éthylène et de 1,3-butadiène ou un terpolymère de 1,3-butadiène, d'éthylène et de styrène.

Selon l'invention ainsi que ses variantes préférentielles décrites ou selon l'un quelconque des modes réalisation que sont le premier mode de réalisation, le deuxième mode de réalisation, le troisième mode de réalisation, le quatrième mode de réalisation et le cinquième mode de réalisation, l'élastomère fortement saturé utile aux besoins de l'invention est de préférence un polymère statistique.

Selon l'invention, la fonction silanol ou alcoxysilane est située en extrémité de la chaîne de l'élastomère fortement saturé. Dans la présente demande, la fonction alcoxysilane ou silanol portée en une des extrémités est désignée dans la présente demande par l'appellation le groupe fonctionnel F¹. De préférence, elle est attachée directement par une liaison covalente à l'unité terminale de l'élastomère fortement saturé, ce qui revient à dire que l'atome de silicium de la fonction est lié directement de façon covalente à un atome de carbone de l'unité terminale de l'élastomère. L'unité terminale à laquelle est directement attaché le groupe fonctionnel F¹ est de préférence constituée d'un méthylène lié à une unité éthylène ou à une unité de formule (I), l'atome Si étant lié au méthylène. Par unité terminale, on entend la dernière unité insérée dans la chaine copolymère par copolymérisation, unité qui est précédée de l'unité pénultième, elle-même précédée de l'unité antepénultième.

Selon une première variante de l'invention, le groupe fonctionnel F¹ est de formule (III-a)

Si(OR¹)_{3-f}(R²)_{f-1}R³ (III-a)

les symboles R¹, identiques ou différents, représentant un alkyle,
le symbole R² représentant un atome d'hydrogène ou un alkyle,
le symbole R³ représentant une chaîne hydrocarbonée substituée par une fonction amine F², de préférence tertiaire,
f étant un nombre entier allant de 1 à 2.

Lorsque 3-f est supérieur à 1, les symboles R¹ sont avantageusement identiques, en particulier méthyle ou éthyle, plus particulièrement méthyle.

Selon une deuxième variante de l'invention, le groupe fonctionnel F¹ est de formule (III-b)

Si(OH)R³R² (III-b)

le symbole R² représentant un atome d'hydrogène ou un alkyle,
le symbole R³ représentant une chaîne hydrocarbonée substituée par une fonction amine F², de préférence tertiaire.

Les alkyles représentés par les symboles R¹ et R² dans les formules (III-a) et (III-b) sont préférentiellement des alkyles ayant 1 à 6 atomes de carbone, plus préférentiellement méthyle ou éthyle, encore plus préférentiellement méthyle.

Parmi les chaînes hydrocarbonées substituées par une fonction amine F² représentées par le symbole R³ dans les formules (III-a) et (III-b), on peut citer les chaînes alcanediyles, notamment celles comportant au plus 6 atomes de carbone, tout particulièrement le groupe 1,3-propanediyle, le groupe alcanediyle portant un substituant, la fonction amine F² , autrement dit, une valence de la chaîne alcanediyle pour la fonction F², l'autre valence pour l'atome de silicium de la fonction silanol ou alcoxysilane.

Selon l'invention, en particulier dans les formules (III-a) et (III-b), la fonction amine peut être une fonction amine primaire, secondaire ou tertiaire. Les fonctions amine primaire ou secondaire peuvent être protégées ou ne pas être protégées. Le groupe protecteur de la fonction amine est par exemple un groupe silyle, en particulier triméthylsilyle ou terbutyldiméthylsilyle. De préférence, la fonction amine F² est de préférence une fonction amine tertiaire.

De préférence, le symbole R³ dans les formules (III-a) et (III-b) représente une chaîne alcanediyle ayant au plus 6 atomes de carbone et substituée par une fonction amine F², de préférence tertiaire.

A titre de groupe fonctionnel F¹, on peut citer les groupes 3-(N,N-diméthylamino)propyl-diméthoxysilyle, 3-(N,N-diméthylamino)propyldiéthoxysilyle, 3-aminopropyldiméthoxysilyle, 3-aminopropyldiéthoxysilyle, 3-(N,N-diméthylamino)propylméthoxyméthylsilyle, 3-(N,N-diméthylamino)propylméthoxy-éthylsilyle, 3-(N,N-diméthylamino)propyléthoxyméthylsilyle, 3-(N,N-diméthylamino)propyl-éthoxyéthylsilyle, 3-aminopropylméthoxyméthylsilyle, 3-aminopropylméthoxyéthylsilyle, 3-aminopropyléthoxyméthylsilyle, 3-aminopropyléthoxyéthylsilyle.

A titre de groupe fonctionnel F¹, on peut aussi citer la forme silanol des groupes fonctionnels précédemment cités qui contiennent une et une seule (*en anglais* « one ») fonction éthoxy ou méthoxy, la forme silanol pouvant être obtenue par hydrolyse de la fonction éthoxy ou méthoxy. A ce titre conviennent les groupes 3-(N,N-diméthylamino)propylméthylsilanol, 3-(N,N-diméthylamino)propyl-éthylsilanol, 3-aminopropylméthylsilanol, 3-aminopropyléthylsilanol.

A titre de groupe fonctionnel F¹, on peut également citer les groupes fonctionnels qu'ils soient sous la forme alcoxy ou silanol, qui ont été précédemment cités et qui comportent une fonction amine sous une forme protégée par un groupe silyle, en particulier triméthylsilyle ou terbutyldiméthylsilyle.

Avantageusement, le groupe fonctionnel F¹ est le 3-(N,N-diméthylamino)propyldiméthoxysilyle, le 3-(N,N-diméthyl-amino)propyldiéthoxysilyle, le 3-(N,N-diméthylamino)propylméthoxyméthylsilyle, le 3-(N,N-diméthylamino)propylméthoxyéthylsilyle, le 3-(N,N-diméthylamino)propyléthoxyméthylsilyle, le 3-(N,N-diméthylamino)propyl-éthoxyéthylsilyle, le 3-(N,N-diméthylamino)propylméthylsilanol ou le 3-(N,N-diméthylamino)propyléthylsilanol. Plus avantageusement, le groupe fonctionnel F¹ est le 3-(N,N-diméthylamino)propyldiméthoxysilyle, le 3-(N,N-diméthylamino)propylméthoxyméthylsilyle ou le 3-(N,N-diméthylamino)propylméthylsilanol.

L'élastomère utile aux besoins de l'invention peut être préparé par un procédé qui comprend les étapes (a) et (b), et le cas échéant l'étape (c) suivantes :
a) la copolymérisation d'un mélange monomère en présence d'un système catalytique comprenant un organomagnésien et un métallocène,
b) la réaction d'un agent de fonctionnalisation avec le polymère obtenu à l'étape a),
c) le cas échéant une réaction d'hydrolyse.

L'étape a) est une copolymérisation du mélange des monomères. Le mélange monomère est un mélange d'éthylène, du 1,3-diène, de préférence du 1,3-butadiène, et éventuellement de l'α-monooléfine. La copolymérisation peut être conduite conformément aux demandes de brevet EP 1 092 731, WO 2004035639, WO 2007054223 et WO 2007054224 en utilisant un système catalytique composé d'un métallocène et d'un organomagnésien utilisés à titre de catalyseur et de co-catalyseur respectivement. Dans le procédé de polymérisation de l'élastomère fortement saturé, en particulier statistique, le système catalytique peut être un système catalytique de type préformé comme ceux décrits dans les documents WO 2017093654 A1, WO 2018020122 A1 et WO 2018020123 A1.

L'homme du métier adapte les conditions de polymérisation décrites dans ces documents de manière à atteindre la microstructure et la macrostructure souhaitées de la chaîne copolymère. Le rapport molaire de l'organomagnésien sur le métal Met constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

Avantageusement, l'organomagnésien est le butyloctylmagnésium ou le butyléthylmagnésium et le métallocène est choisi parmi [{Me₂SiFlu₂Nd(µ-BH₄)₂Li(THF)}₂], [Me₂SiFlu₂Nd(µ-BH₄)₂Li(THF)], [Me₂SiFlu₂Nd(µ-BH₄)(THF)], [{Me₂SiFlu₂Nd(µ-BH₄)(THF)}₂], [Me₂SiFlu₂Nd(µ-BH₄)], [Me₂Si(C₅H₄)(C₁₃H₈)NdCl], [Me₂Si(C₅H₄)(C₁₃H₈)Nd(BH₄)₂Li(THF)] , [Me₂Si(C₅H₄)(C₁₃H₈)Nd(BH₄)(THF)], le symbole Flu représentant le groupe C₁₃H₈.

L'étape b) consiste à faire réagir un agent de fonctionnalisation avec le copolymère obtenu à l'étape a) pour fonctionnaliser en extrémité de chaîne le copolymère. L'agent de fonctionnalisation est un composé de formule (IV),

Si(Fc¹)_{4-g}(Rc²)_{g-1}Rc³ (IV)

les symboles Fc¹, identiques ou différents, représentant un groupe alcoxy ou un atome d'halogène,
le symbole Rc² représentant un atome d'hydrogène ou un alkyle,
le symbole Rc³, représentant une chaîne hydrocarbonée substituée par une fonction amine Fc²,
g étant un nombre entier allant de 1 à 2.

Lorsque le symbole Fc¹ représente un groupe alcoxy, le groupe alcoxy est de préférence méthoxy ou éthoxy. Lorsque le symbole Fc¹ représente un atome d'halogène, l'atome d'halogène est de préférence le chlore.

Parmi les chaînes hydrocarbonées représentée par les symboles Rc² dans la formule (IV), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc² qui sont représentées par les symboles Rc³ dans la formule (IV), on peut citer les chaînes alcanediyles, de préférence celles comportant au plus 6 atomes de carbone, de manière plus préférentielle le groupe 1,3-propanediyle, le groupe alcanediyle portant un substituant, la fonction amine Fc², autrement dit une valence de la chaîne alcanediyle pour la fonction Fc², l'autre valence pour l'atome de silicium de la fonction silanol ou alcoxysilane.

A titre d'agent de fonctionnalisation, on peut citer les composés (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine, de préférence (N,N-diméthyl-3-aminopropyl)méthyldiméthoxysilane, (N,N-diméthyl-3-aminopropyl)éthyldiméthoxysilane, , (N,N-diméthylaminopropyl)triméthoxysilane, (N-(3-triméthoxysilyl)-propyl)-N-(triméthylsilyl)silanamine, de manière préférentielle les composés (N,N-diméthyl-3-aminopropyl)méthyldiméthoxysilane, (N,N-diméthylaminopropyl)triméthoxysilane.

L'agent de fonctionnalisation est ajouté typiquement au milieu de polymérisation résultant de l'étape a). Il est typiquement ajouté au milieu de polymérisation à un taux de conversion des monomères choisi par l'homme du métier selon la macrostructure souhaitée de l'élastomère. L'étape a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Une fois fonctionnalisé, l'élastomère fortement saturé peut être récupéré, notamment en l'isolant du milieu réactionnel. Les techniques pour séparer l'élastomère du milieu réactionnel sont bien connues de l'homme du métier et choisies par l'homme du métier selon la quantité d'élastomère à séparer, sa macrostructure et les outils mis à dispositions de l'homme du métier. Peuvent être cités par exemple les techniques de coagulation de l'élastomère fortement saturé dans un solvant tel que le méthanol, les techniques d'évaporation du solvant du milieu réactionnel et des monomères résiduels, par exemple sous pression réduite.

Lorsque l'agent de fonctionnalisation est de formule (IV) et g est égal à 2, l'étape b) peut être suivie d'une réaction d'hydrolyse pour former un élastomère portant en extrémité de chaîne une fonction silanol. L'hydrolyse peut être conduite par une étape de stripping de la solution contenant l'élastomère à l'issue de l'étape b), de manière connue par l'homme du métier.

Lorsque l'agent de fonctionnalisation est de formule (IV) et que Rc² représente une chaîne hydrocarbonée substituée par une fonction amine Fc² sous une forme protégée, l'étape b) peut être aussi suivie d'une réaction d'hydrolyse pour déprotéger la fonction en extrémité de la chaîne de l'élastomère. La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape c) est une étape optionnelle selon que l'on souhaite transformer ou non le groupe fonctionnel en fonction silanol ou que l'on souhaite déprotéger ou non la fonction protégée. Préférentiellement, l'étape c) est conduite avant de séparer l'élastomère du milieu réactionnel à l'issue de l'étape b) ou bien simultanément à cette étape de séparation.

L'élastomère fortement saturé peut être constitué d'un mélange d'élastomères utiles aux besoins de l'invention qui se différencient des uns des autres par leurs microstructures ou par leurs macrostructures.

La composition de caoutchouc utile aux besoins de l'invention a pour caractéristique essentielle de comprendre une charge renforçante. La charge renforçante peut comprendre tout type de charge connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante utile aux besoins de l'invention a pour caractéristique essentielle de comprendre un noir de carbone. Selon l'invention, le noir de carbone dans la composition de caoutchouc représente plus de 50% en masse de la charge renforçante ou autrement dit la charge renforçante comprend plus de 50% en masse de noir de carbone par rapport au poids total de charge renforçante.

Comme noirs de carbone conviennent tous les noirs de carbone, notamment les noirs conventionnellement utilisés dans les bandes de roulement pour pneumatique (noirs dits de grade pneumatique). Les noirs de carbone peuvent être utilisés à l'état isolé, tels que disponibles commercialement, ou sous tout autre forme, par exemple comme support de certains des additifs de caoutchouterie utilisés. On peut citer plus particulièrement les noirs de carbone renforçants des séries 100 et 200, 300, ou les noirs de série 500, 600 ou 700 (grades ASTM). A titre de noir de carbone, on peut utiliser un (« one » en anglais) noir de carbone ou un mélange de noirs de carbone.

La charge renforçante peut comprendre une charge inorganique. Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment de 60 à 300 m²/g- On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la silice à l'élastomère fortement saturé, on peut utiliser de manière bien connue un agent de couplage (ou agent de liaison) au moins bifonctionnel destiné à assurer une connexion suffisante, de nature chimique et/ou physique, entre la silice (surface de ses particules) et l'élastomère. On utilise en particulier des organosilanes ou des polyorganosiloxanes au moins difonctionnels. Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De préférence, le taux de charge renforçante est compris dans un domaine allant de 25 à 200 pce, allant de préférence de 25 à 150 pce. Le taux optimum de charge renforçante étant de manière connue différent selon les applications particulières visées, le taux de charge renforçante est ajusté par l'homme du métier en fonction de l'usage à laquelle est destinée la composition de caoutchouc conforme à l'invention.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

Selon l'invention, la composition de caoutchouc contient un système de réticulation. La réticulation chimique permet la formation de liaisons covalentes entre les chaînes d'élastomère. Le système de réticulation peut être un système de vulcanisation ou être constitué d'un ou plusieurs composés peroxydes. Le système de réticulation est de préférence un système de vulcanisation.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 pce, en particulier de 1 à 10 pce. L'accélérateur primaire de vulcanisation est utilisé à un taux préférentiel compris entre 0.5 et 10 pce, plus préférentiellement compris entre 0.5 et 5 pce. On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de préférence de 0.01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants, .

La composition de caoutchouc peut contenir en plus de l'élastomère fortement saturé un deuxième élastomère. Le deuxième élastomère peut être choisi dans le groupe des élastomères diéniques constitué par les polybutadiènes, les polyisoprènes, les copolymères de butadiène, les copolymères d'isoprène et leur mélange. Néanmoins, plus la composition de caoutchouc est riche en l'élastomère fortement saturé, plus le compromis entre l'hystérèse et la rigidité de la composition de caoutchouc est modifié. C'est pourquoi, la composition de caoutchouc selon l'invention contient de préférence plus de 50 pce de l'élastomère fortement saturé, de manière plus préférentielle au moins 80 pce de l'élastomère fortement saturé. Avantageusement, le taux de l'élastomère fortement saturé dans la composition de caoutchouc selon l'invention, y compris ses variantes préférentielles est de 100 pce. Les taux préférentiels d'élastomères fortement saturé peuvent s'appliquer dans la composition de caoutchouc décrite selon l'un quelconque des modes de réalisation de l'invention que sont le premier mode , le deuxième mode, le troisième mode, le quatrième mode et le cinquième mode, y compris leurs aspects préférentiels.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

De manière générale, tous les constituants de base de la composition comprise dans le pneumatique de l'invention, à l'exception du système de réticulation, à savoir la charge inorganique renforçante, l'agent de couplage le cas échéant, sont incorporés de manière intime, par malaxage, à l'élastomère diénique, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

La composition de caoutchouc conforme à l'invention, pouvant être soit à l'état cru (avant réticulation ou vulcanisation), soit à l'état cuit (après réticulation ou vulcanisation), peut constituer un produit semi-fini qui peut être utilisé dans un pneumatique, notamment comme bande de roulement de pneumatique.

Le pneumatique, autre objet de l'invention, comprend une composition de caoutchouc selon l'invention, en particulier selon les variantes préférentielles décrites. Le pneumatique conforme à l'invention peut aussi comprendre une composition de caoutchouc décrite selon l'un quelconque des modes de réalisation de l'invention que sont le premier mode, le deuxième mode, le troisième mode, le quatrième mode et le cinquième mode, y compris leurs aspects préférentiels.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Méthodes de caractérisation :

### Résonance magnétique nucléaire (RMN) :

Tous les produits de fonctionnalisation des copolymères de l'éthylène et du 1,3-butadiène sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBIz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. Les expériences bidimensionnelles ¹H/¹³C et ¹H/²⁹Si sont utilisées dans le but de déterminer la structure des polymères fonctionnels. La détermination de la microstructure des copolymères est définie dans la littérature, selon l'article de Llauro et al., Macromolecules 2001, 34, 6304-6311.

La structure chimique finale de chaque polymère fonctionnel est identifiée par RMN (¹H, ¹³C et ²⁹Si).

Le spectre RMN 1D 1H enregistré dans des conditions quantitatives permet de calculer le taux de (N,N-dimethyl-3-aminopropyl)methyldimethoxysilane greffé au polymère. Les signaux des protons caractéristiques de la fonction greffée sont observables à des déplacements chimiques de 3.37 ppm pour le groupement méthoxy (CH₃-O-Si), 0.11ppm à 0.02 ppm pour les groupements méthyls liés au silicium ((CH3)2-Si) et 0.66 ppm à 0.45 ppm pour le motif méthylène en alpha du silicium (Si-CH2 -R). La structure de greffage est confirmée par une carte de corrélation bidimensionnelle proton/silicium-29. Les signaux silicium du (N,N-dimethyl-3-aminopropyl)methyldimethoxysilane greffé au polymère en bout de chaîne correspond à deux massifs à des déplacements chimiques 29Si de 15.5 ppm et 21.8 ppm. Ces massifs correspondent respectivement à la fonction liée à un motif butadiène et à un motif à base d'éthylène (motif éthylényl ou motif UD).

### Plasticité Mooney :

Pour mesurer la plasticité Mooney, on utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% (cycle aller), puis de 50% à 0,1% (cycle retour). Les résultats exploités sont le module complexe de cisaillement G^{∗}, le facteur de perte tan(δ) et l'écart de module ΔG^{∗} entre les valeurs à 0,1 et 50% de déformation (effet Payne). Pour le cycle retour, on indique la valeur maximale de tan(δ) observée, noté tan(δ)max. Le module complexe G^{∗} à 50% de déformation, noté G^{∗}, l'écart de module ΔG^{∗} entre les valeurs 0,1 et 50% de déformation (effet Payne) et la valeur de tan(δ)max sont donnés en base 100, la valeur 100 étant attribuée à un témoin (T1, T2). Plus la valeur de ΔG^{∗} est faible, plus la non linéarité est faible. Plus la valeur de tan(δ)max est faible, plus l'hystérèse de la composition de caoutchouc est faible. Plus la valeur de G^{∗} est faible, plus la rigidité de la composition est faible.

On enregistre également la réponse d'un échantillon de composition soumis à une sollicitation sinusoïdale en cisaillement simple alterné lors d'un balayage en température, soumis à une sollicitation sinusoïdale à contrainte imposée de 0,7 MPa et à une fréquence de 10 Hz, la température allant de -60°C à 100°C, à raison une vitesse de 1,5°C par minute. La Tg du mélange est indiquée par la température du maximum de tan(δ), notée « Tg (°C) tan(δ) max ». Un autre résultat exploité est le module complexe de cisaillement dynamique (G^{∗}), noté Module G^{∗}, par exemple à 60°C. Pour plus de lisibilité les résultats de G^{∗} seront indiqués en base 100, la valeur 100 étant attribuée à un témoin (T1, T2). Un résultat inférieur à 100 indiquant une diminution de la valeur concernée, et inversement, un résultat supérieur à 100, indiquera une augmentation de la valeur concernée.

### II.2-Préparation des élastomères :

Quatre élastomères fortement saturés, EBRT1, EBRF1, EBRT2 et EBRF2, sont préparés selon le mode opératoire de polymérisation décrit-ci après. Pour EBRF1 et EBRF2, la réaction de polymérisation est suivie d'une réaction de fonctionnalisation selon les conditions opératoires décrites ci-après. Pour EBRT1 et EBRT2, la réaction de polymérisation est immédiatement suivie d'une réaction de terminaison par ajout de méthanol, puis les élastomères sont coagulés dans du méthanol, puis séchés selon les mêmes conditions que EBRF1 et EBRF2.

Les élastomères sont ensuite analysés par RMN, leur plasticité Mooney est également mesurée. Leurs caractéristiques figurent dans le tableau 1.

### Matières premières :

Tous les réactifs sont obtenus commercialement excepté le métallocène [{Me₂SiFlu₂Nd(µ-BH₄)₂Li(THF)}₂] (Flu désignant C₈H₁₃) qui peut être préparé selon le mode opératoire décrits dans le document WO 2007054224.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le 1,3-butadiène est purifié sur gardes d'alumine. L' agent de fonctionnalisation est utilisé sans purification préalable. Le (N,N-dimethyl-3-aminopropyl)methyldimethoxysilane (AB252529), provient de chez ABCR.

Le solvant méthylcyclohexane provenant de chez BioSolve est séché et purifié sur colonne d'alumine dans une fontaine à solvant provenant de chez mBraun et utilisés en atmosphère inerte. Le méthanol (99%, classe 3, grade II) provient de la société Laurylas, le C₆D₆ (99,6% atom D) de chez Aldrich et est stocké à froid. Toutes les réactions sont effectuées en atmosphère inerte.

### Equipement :

Toutes les polymérisations et les réactions de fonctionnalisation de copolymères de l'éthylène et du 1,3-butadiène sont effectuées dans un réacteur à cuve jetable en verre de 500 mL (flacons Schott) muni d'une pale d'agitation en acier inoxydable. Le contrôle de la température est assuré grâce à un bain d'huile thermostaté connecté à une double enveloppe en polycarbonate. Ce réacteur possède toutes les entrées ou sorties nécessaires aux manipulations.

### Mode opératoire de polymérisation :

Dans un réacteur contenant du méthylcyclohexane, on ajoute le co-catalyseur, le butyloctylmagnésium (BOMAG) puis le métallocène. La durée d'alkylation est de 10 minutes, la température de réaction est de 20 °C. Les quantités respectives des constituants du système catalytique figurent dans le tableau 2.

Ensuite, les monomères sont ajoutés de manière continue selon les quantités respectives indiquées dans le tableau 2. La polymérisation est conduite dans des conditions de température et de pression constante 80°C et 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

### Mode opératoire de fonctionnalisation :

Lorsque la conversion en monomères souhaitée est atteinte, le contenu du réacteur est dégazé puis l'agent de fonctionnalisation, le (N,N-diméthyl-3-aminopropyl)méthyldiméthoxysilane, est introduit sous atmosphère inerte par surpression. Le milieu réactionnel est agité pendant un temps et une température indiqués dans le tableau 2. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé puis séché à 60°C sous vide jusqu'à masse constante. Le taux de fonctionnalisation est d'environ 40%.

### Mode opératoire de la préparation des compositions de caoutchouc :

Des compositions de caoutchouc dont la formulation exprimée en pce (parties en poids pour cent partie d'élastomère) figure dans le tableau 3, ont été préparées selon le mode opératoire suivant : on introduit dans un mélangeur interne (taux de remplissage final : environ 70% en volume), dont la température initiale de cuve est d'environ 80°C, successivement l'élastomère, le noir de carbone, ainsi que les divers autres ingrédients a l'exception du système de vulcanisation. On conduit alors un travail thermomécanique (phase non-productive) en une étape, qui dure au total environ 5 min, jusqu'à atteindre une température maximale de « tombée » de 150°C. On récupère le mélange ainsi obtenu, on le refroidit puis on incorpore du soufre et l'accélérateur sur un mélangeur (homo-finisseur) à 40 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

### II.3-Résultats :

Les résultats figurent dans le tableau 4. Les valeurs de ΔG^{∗} et Tanδ max des compositions C1 et C2 conformes à l'invention sont bien plus faibles que celles de leur composition témoin, respectivement T1 et T2. En parallèle, la valeur de G^{∗} est aussi plus faible. Les compositions de caoutchouc conformes à l'invention sont à la fois moins hystérétiques et moins rigides que les compositions témoin.

**Tableau 1**

| | EBRT1 | EBRT2 | EBRF1 | EBRF2 |
|---|---|---|---|---|
| Unité UA (% mol) | 78 | 79 | 78 | 79 |
| Unité UB (% mol) | 6 | 6 | 6 | 5 |
| Unité UC (% mol) | 9 | 8 | 9 | 8 |
| Unité UD (% mol) | 7 | 7 | 7 | 8 |
| ML (1+4) 100°C | 60 | 85 | 57 | 83 |

**Tableau 2**

| Exemple | Métallocène (mol/L) | Co-catalyseur (mol/L) | Composition mélange gazeux alimentation (%mol Eth/Bde) | Rapport Agent fonctionnalisation / co-catalyseur | Durée fonctionnalisation (min) | Température de fonctionnalisation (°C) |
|---|---|---|---|---|---|---|
| EBRT1 | 0.00007 | 0.00033 | 80/20 | 0 | - | - |
| EBRT2 | 0.07 | 0.00021 | 80/20 | 0 | - | - |
| EBRF1 | 0.07 | 0.00047 | 80/20 | 4 | 60 | 80 |
| EBRF2 | 0.07 | 0.00041 | 80/20 | 4 | 60 | 80 |

**Tableau 3**

| Composition (pce) | T1 | C1 | T2 | C2 |
|---|---|---|---|---|
| EBRT1 | 100 | - | - | - |
| EBRF1 | - | 100 | - | - |
| EBRT2 | - | - | 100 | - |
| EBRF2 | - | - | - | 100 |
| Noir de carbone (1) | 47 | 47 | 47 | 47 |
| Antioxydant (2) | 3 | 3 | 3 | 3 |
| Cire anti-ozone | 1 | 1 | 1 | 1 |
| Acide stéarique | 2.5 | 2.5 | 2.5 | 2.5 |
| ZnO | 3 | 3 | 3 | 3 |
| Accélérateur (3) | 1.5 | 1.5 | 1.5 | 1.5 |
| Soufre | 0.6 | 0.6 | 0.6 | 0.6 |

| | | | | |
|---|---|---|---|---|
| (1) N375 (2) N-(1,3-diméthylbutyl)-N'-phényl-p-phenylènediamine ("Santoflex 6-PPD" société Flexsys) (3) N-cyclohexyl-2-benzothiazol-sulfénamide (« Santocure CBS » de la société Flexsys) | | | | |

**Tableau 4**

| Propriétés à cuit | T1 | C1 | T2 | C2 |
|---|---|---|---|---|
| ΔG^{∗} 23°C | 100 | 74 | 100 | 67 |
| Tanδ max 23°C | 100 | 88 | 100 | 91 |
| G^{∗} 23°C | 100 | 97 | 100 | 86 |
| Module G^{∗} | 100 | 91 | 100 | 87 |

## Revendications

1. Composition de caoutchouc qui comprend une charge renforçante qui contient un noir de carbone, un système de réticulation et un élastomère fortement saturé comprenant des unités 1,3-diène et des unités éthylène et portant en extrémité de chaîne un groupe fonctionnel F¹ composé d'une fonction comportant un atome de silicium et d'une fonction amine F², la fonction comportant un atome de silicium étant une fonction silanol ou une fonction alcoxysilane, les unités éthylène représentant plus de 50% en mole de l'ensemble des unités monomères de l'élastomère fortement saturé, le noir de carbone représentant plus de 50% en masse de la charge renforçante.

2. Composition selon la revendication 1 dans laquelle les unités éthylène représentent plus de 60% en mole de l'ensemble des unités monomères de l'élastomère fortement saturé, de préférence représentent au moins 65% en mole de l'ensemble des unités monomères de l'élastomère fortement saturé.

3. Composition selon l'une quelconque des revendications 1 à 2 dans laquelle le 1,3-diène est le 1,3-butadiène.

4. Composition selon l'une quelconque des revendications 1 à 3 dans laquelle l'élastomère fortement saturé contient des unités de formule (I) ou des unités de formule (II). 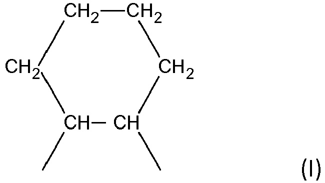
- CH₂ - CH (CH=CH₂)- (II)

5. Composition selon l'une quelconque des revendications 1 à 4 dans laquelle l'élastomère fortement saturé contient des unités 1,4-trans qui représentent plus de 80% en mole des unités 1,3-diène de l'élastomère fortement saturé.

6. Composition selon l'une quelconque des revendications 1 à 5 dans laquelle l'élastomère fortement saturé est un copolymère d'éthylène et d'un 1,3-diène ou un terpolymère d'un 1,3-diène, d'éthylène et d'une α-monooléfine, de préférence un copolymère d'éthylène et de 1,3-butadiène ou un terpolymère de 1,3-butadiène, d'éthylène et de styrène.

7. Composition selon l'une quelconque des revendications 1 à 6 dans laquelle l'élastomère fortement saturé est un polymère statistique.

8. Composition selon l'une quelconque des revendications 1 à 7 dans laquelle l'élastomère fortement saturé est un copolymère d'éthylène et de 1,3-butadiène contenant les unités UA, UB, UC, UD et UE suivantes réparties de façon statistique selon les pourcentages molaires indiqués ci-après
| | | |
|---|---|---|
| UA) | -CH₂-CH₂- | selon un pourcentage molaire de m% |
| UB) | -CH₂-CH=CH-CH₂- | selon un pourcentage molaire de n% |
| UC) | -CH₂-CH(CH=CH₂)- | selon un pourcentage molaire de o% |
| UD) | 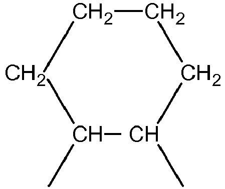 | selon un pourcentage molaire de p% |
| UE) | 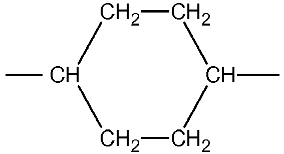 | selon un pourcentage molaire de q% |
▪ m, n, o, p et q étant des nombres allant de 0 à 100,
▪ m > 50; n + o > 0 ; p > 0 ; q ≥ 0, de préférence 0 < o + p ≤ 25 ; o + p + q ≥ 5 ; n + o >0 ; q ≥ 0, de manière plus préférentielle m ≥ 65 ; n + o + p + q ≥ 15, 12 ≥ p + q ≥ 2 ; 1 ≥ n / (o + p + q), lorsque q est non nul, 20 ≥ p / q ≥ 1
▪ les pourcentages molaires respectifs de m, n, o, p et q étant calculés sur la base de la somme de m+ n + o + p + q qui est égale à 100.

9. Composition selon l'une quelconque des revendications 1 à 8 dans laquelle le groupe fonctionnel F¹ est attaché directement par une liaison covalente à l'unité terminale de l'élastomère fortement saturé, l'unité terminale étant de préférence constituée d'un méthylène lié à une unité éthylène ou à une unité de formule (I), l'atome Si étant lié au méthylène.

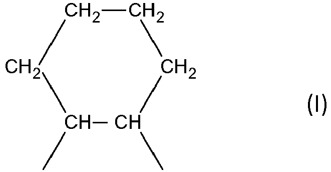

10. Composition de caoutchouc selon l'une quelconque des revendications 1 à 9 dans laquelle le groupe fonctionnel F¹ est de formule (III-a) ou (III-b)
Si(OR¹)_{3-f}(R²)_{f-1}R³ (III-a)
Si(OH)R²R³ (III-b)
les symboles R¹, identiques ou différents, représentant un alkyle,
le symbole R² représentant un atome d'hydrogène ou un alkyle,
le symbole R³ représentant une chaîne hydrocarbonée substituée par une fonction amine F², de préférence tertiaire,
f étant un nombre entier allant de 1 à 2.

11. Composition de caoutchouc selon la revendication 10 dans laquelle les symboles R¹ et R² sont méthyle ou éthyle.

12. Composition de caoutchouc selon la revendication 10 ou 11 dans laquelle le symbole R³ représente une chaîne alcanediyle ayant au plus 6 atomes de carbone et substituée par une fonction F².

13. Composition selon l'une quelconque des revendications 1 à 12 dans laquelle le groupe fonctionnel F¹ est le 3-(N,N-diméthylamino)propyldiméthoxysilyle, le 3-(N,N-diméthyl-amino)propyldiéthoxysilyle, le 3-(N,N-diméthylamino)propylméthoxyméthylsilyle, le 3-(N,N-diméthylamino)propylméthoxyéthylsilyle, le 3-(N,N-diméthylamino)propyléthoxyméthylsilyle, le 3-(N,N-diméthylamino)propyl-éthoxyéthylsilyle, le 3-(N,N-diméthylamino)propylméthylsilanol ou le 3-(N,N-diméthylamino)propyléthylsilanol, de préférence le 3-(N,N-diméthylamino)propyldiméthoxysilyle, le 3-(N,N-diméthylamino)propylméthoxyméthylsilyle ou le 3-(N,N-diméthylamino)propylméthylsilanol.

14. Composition de caoutchouc selon l'une quelconque des revendications 1 à 13 dans laquelle le système de réticulation est un système de vulcanisation.

15. Pneumatique qui comprend une composition de caoutchouc définie selon l'une quelconque des revendications 1 à 14.

## Patentansprüche

1. Kautschukzusammensetzung, die einen verstärkenden Füllstoff, der einen Ruß enthält, ein Vernetzungssystem und ein hochgesättigtes Elastomer umfasst, das 1,3-Dieneinheiten und Ethyleneinheiten umfasst und am Kettenende eine funktionelle Gruppe F¹ trägt, die aus einer Funktion mit einem Siliciumatom und einer Aminfunktion F² besteht, wobei es sich bei der Funktion mit einem Siliciumatom um eine Silanol- oder Alkoxysilanfunktion handelt, wobei die Ethyleneinheiten mehr als 50 Mol-% aller Monomereinheiten des hochgesättigten Elastomers ausmachen, wobei der Ruß mehr als 50 Massen-% des verstärkenden Füllstoffs ausmacht.

2. Zusammensetzung nach Anspruch 1, wobei die Ethyleneinheiten mehr als 60 Mol-% aller Monomereinheiten des hochgesättigten Elastomers ausmachen und vorzugsweise mindestens 65 Mol-% aller Monomereinheiten des hochgesättigten Elastomers ausmachen.

3. Zusammensetzung nach einem der Ansprüche 1 bis 2, wobei es sich bei dem 1,3-Dien um 1,3-Butadien handelt.

4. Zusammensetzung nach einem der Ansprüche 1 bis 3, wobei das hochgesättigte Elastomer Einheiten der Formel (I) oder Einheiten der Formel (II) enthält: 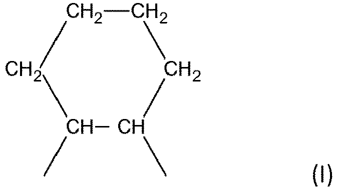
-CH₂-CH(CH=CH₂)- (II)

5. Zusammensetzung nach einem der Ansprüche 1 bis 4, wobei das hochgesättigte Elastomer 1,4-trans-Einheiten enthält, die mehr als 80 Mol-% der 1,3-Dieneinheiten des hochgesättigten Elastomers ausmachen.

6. Zusammensetzung nach einem der Ansprüche 1 bis 5, wobei es sich bei dem hochgesättigten Elastomer um ein Copolymer von Ethylen und einem 1,3-Dien oder ein Terpolymer von einem 1,3-Dien, Ethylen und einem α-Monoolefin, vorzugsweise ein Copolymer von Ethylen und 1,3-Butadien oder ein Terpolymer von 1,3-Butadien, Ethylen und Styrol, handelt.

7. Zusammensetzung nach einem der Ansprüche 1 bis 6, wobei es sich bei dem hochgesättigten Elastomer um ein statistisches Polymer handelt.

8. Zusammensetzung nach einem der Ansprüche 1 bis 7, wobei es sich bei dem hochgesättigten Elastomer um ein Copolymer von Ethylen und 1,3-Butadien handelt, das die folgenden UA-, UB-, UC-, UD- und UE-Einheiten in statistischer Verteilung gemäß den nachstehend angegebenen Molprozentanteilen enthält:
UA) -CH₂-CH₂-gemäß einem Molprozentanteil von m % UB) -CH₂-CH=CH-CH₂-gemäß einem Molprozentanteil von n % UC) -CH₂-CH(CH=CH₂)-gemäß einem Molprozentanteil von o %
UD) 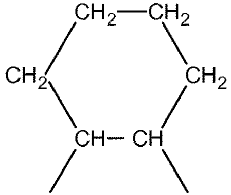 gemäß einem Molprozentanteil von p %
UE) 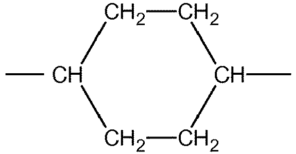 gemäß einem Molprozentanteil von q %,
▪ wobei m, n, o, p und q für Zahlen im Bereich von 0 bis 100 stehen,
▪ m > 50; n + o > 0; p > 0; q ≥ 0, vorzugsweise 0 < o + p ≤ 25; o + p + q ≥ 5; n + o > 0; q ≥ 0, weiter bevorzugt m ≥ 65; n + o + p + q ≥ 15, 12 ≥ p + q ≥ 2; 1 ≥ n / (o + p + q), wenn q ungleich null ist, 20 ≥ p / q ≥ 1,
▪ wobei die jeweiligen Molprozentanteile von m, n, o, p und q auf der Basis der Summe von m + n + o + p + q, die gleich 100 ist, berechnet werden.

9. Zusammensetzung nach einem der Ansprüche 1 bis 8, wobei die funktionelle Gruppe F¹ über eine kovalente Bindung direkt an die endständige Einheit des hochgesättigten Elastomers gebunden ist, wobei die endständige Einheit vorzugsweise aus einem an eine Ethyleneinheit oder an eine Einheit der Formel (I) gebundenen Methylen besteht, wobei das Si-Atom an das Methylen gebunden ist.

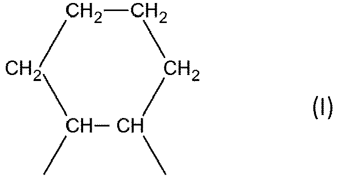

10. Kautschukzusammensetzung nach einem der Ansprüche 1 bis 9, wobei die funktionelle Gruppe F¹ die Formel (III-a) oder (III-b) aufweist:
Si(OR¹)_{3-f}(R²)_{f-1}R³ (III-a)
Si(OH)R²R³ (III-b)
wobei
die Symbole R¹ gleich oder verschieden sind und für ein Alkyl stehen,
die Symbole R² für ein Wasserstoffatom oder ein Alkyl stehen,
die Symbole R³ für eine Kohlenwasserstoffkette, die durch eine Aminfunktion F², die vorzugsweise tertiär ist, substituiert ist, stehen,
f für eine ganze Zahl im Bereich von 0 bis 2 steht.

11. Kautschukzusammensetzung nach Anspruch 10, wobei die Symbole R¹ und R² Methyl oder Ethyl sind.

12. Kautschukzusammensetzung nach Anspruch 10 oder 11, wobei das Symbol R³ für eine Alkandiylkette steht, die höchstens 6 Kohlenstoffatome aufweist und durch eine Funktion F² substituiert ist.

13. Zusammensetzung nach einem der Ansprüche 1 bis 12, wobei es sich bei der funktionellen Gruppe F¹ um 3-(N,N-Dimethylamino)propyldimethoxysilyl, 3-(N,N-Dimethylamino)propyldiethoxysilyl 3-(N,N-Dimethylamino)propylmethoxymethylsilyl, 3-(N,N-Dimethylamino)propylmethoxyethylsilyl, 3-(N,N-Dimethylamino)propylethoxymethylsilyl, 3-(N,N-Dimethylamino)propylethoxyethylsilyl, 3-(N,N-Dimethylamino)propylmethylsilanol oder 3-(N,N-Dimethylamino)propylethylsilanol, vorzugsweise 3-(N,N-Dimethylamino)propyldimethoxysilyl, 3-(N,N-Dimethylamino)propylmethoxymethylsilyl oder 3-(N,N-Dimethylamino)propylmethylsilanol, handelt.

14. Kautschukzusammensetzung nach einem der Ansprüche 1 bis 13, wobei es sich bei dem Vernetzungssystem um ein Vulkanisationssystem handelt.

15. Reifen, der eine Kautschukzusammensetzung gemäß einem der Ansprüche 1 bis 14 umfasst.

## Claims

1. Rubber composition which comprises a reinforcing filler which contains a carbon black, a crosslinking system and a highly saturated elastomer comprising 1,3-diene units and ethylene units and bearing, at the chain end, a functional group F¹ composed of a function comprising a silicon atom and of an amine function F², the function comprising a silicon atom being a silanol function or an alkoxysilane function, the ethylene units representing more than 50 mol% of all the monomer units of the highly saturated elastomer, the carbon black representing more than 50% by weight of the reinforcing filler.

2. Composition according to Claim 1, in which the ethylene units represent more than 60 mol% of all the monomer units of the highly saturated elastomer, preferably represent at least 65 mol% of all the monomer units of the highly saturated elastomer.

3. Composition according to either one of Claims 1 and 2, in which the 1,3-diene is 1,3-butadiene.

4. Composition according to any one of Claims 1 to 3, in which the highly saturated elastomer contains units of formula (I) or units of formula (II): 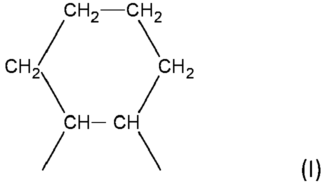
-CH₂-CH(CH=CH₂)- (II).

5. Composition according to any one of Claims 1 to 4, in which the highly saturated elastomer contains 1,4-trans units which represent more than 80 mol% of the 1,3-diene units of the highly saturated elastomer.

6. Composition according to any one of Claims 1 to 5, in which the highly saturated elastomer is a copolymer of ethylene and a 1,3-diene or a terpolymer of a 1,3-diene, ethylene and an α-monoolefin, preferably a copolymer of ethylene and 1,3-butadiene or a terpolymer of 1,3-butadiene, ethylene and styrene.

7. Composition according to any one of Claims 1 to 6, in which the highly saturated elastomer is a random polymer.

8. Composition according to any one of Claims 1 to 7, in which the highly saturated elastomer is a copolymer of ethylene and 1,3-butadiene containing the following UA, UB, UC, UD and UE units distributed randomly according to the molar percentages indicated below
| | | |
|---|---|---|
| UA) | -CH₂-CH₂- | according to a molar percentage of m% |
| UB) | -CH₂-CH=CH-CH₂- | according to a molar percentage of n% |
| UC) | -CH₂-CH(CH=CH₂)- | according to a molar percentage of o% |
| UD) | 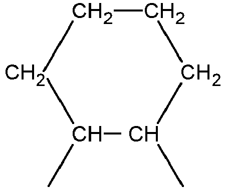 | according to a molar percentage of p% |
| UE) | 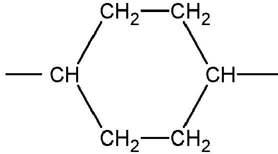 | according to a molar percentage of q% |
▪ m, n, o, p and q being numbers ranging from 0 to 100,
▪ m > 50; n + o > 0; p > 0; q ≥ 0, preferably 0 < o + p ≤ 25; o + p + q ≥ 5; n + o > 0; q ≥ 0, more preferentially m ≥ 65; n + o + p + q ≥ 15, 12 ≥ p + q ≥ 2; 1 ≥ n / (o + p + q), when q is not zero, 20 ≥ p / q ≥ 1
▪ the respective molar percentages of m, n, o, p and q being calculated on the basis of the sum of m + n + o + p + q, which is equal to 100.

9. Composition according to any one of Claims 1 to 8 , in which the functional group F¹ is attached directly via a covalent bond to the end unit of the highly saturated elastomer, the end unit preferably consisting of a methylene bonded to an ethylene unit or to a unit of formula (I), the Si atom being bonded to the methylene:

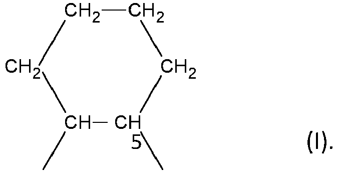

10. Rubber composition according to any one of Claims 1 to 9, in which the functional group F¹ is of formula (III-a) or (III-b):
Si(OR¹)_{3-f}(R²)_{f-1}R³ (III-a)
Si(OH)R²R³ (III-b)
the R¹ symbols, which are identical or different, representing an alkyl,
the R² symbol representing a hydrogen atom or an alkyl,
the symbol R³ representing a hydrocarbon chain substituted by a, preferably tertiary, amine function F²,
f being an integer ranging from 1 to 2.

11. Rubber composition according to Claim 10, in which the R¹ and R² symbols are methyl or ethyl.

12. Rubber composition according to Claim 10 or 11, in which the R³ symbol represents an alkanediyl chain having at most 6 carbon atoms and substituted by a function F².

13. Composition according to any one of Claims 1 to 12, in which the functional group F¹ is 3-(N,N-dimethylamino)propyldimethoxysilyl, 3-(N,N-dimethylamino)propyldiethoxysilyl 3-(N,N-dimethylamino)propylmethoxymethylsilyl, 3-(N,N-dimethylamino)propylmethoxyethylsilyl, 3-(N,N-dimethylamino)propylethoxymethylsilyl, 3-(N,N-dimethylamino)propylethoxyethylsilyl, 3-(N,N-dimethylamino)propylmethylsilanol or 3-(N,N-dimethylamino)propylethylsilanol, preferably 3-(N,N-dimethylamino)propyldimethoxysilyl, 3-(N,N-dimethylamino)propylmethoxymethylsilyl or 3-(N,N-dimethylamino)propylmethylsilanol.

14. Rubber composition according to any one of Claims 1 to 13, in which the crosslinking system is a vulcanization system.

15. Tyre which comprises a rubber composition defined according to any one of Claims 1 to 14.
